# FASCICULE DE BREVET EUROPEEN

(11) **EP 1 744 995 B1**
(45) Date de publication et mention de la délivrance du brevet: **01.03.2017**
(21) Numéro de dépôt: 05746616.1
(22) Date de dépôt: 27.04.2005
(51) Int. Cl.: C03C 17/36

(54) **SUBSTRAT MUNI D'UN EMPILEMENT A PROPRIETES THERMIQUES**
SUBSTRAT MIT EINEM STAPEL MIT THERMISCHEN EIGENSCHAFTEN
SUBSTRATE WITH A STACK HAVING THERMAL PROPERTIES

(30) Priorité: 05.05.2004 FR 0404804
(43) Date de publication de la demande: 24.01.2007
(73) Titulaire: SAINT-GOBAIN GLASS FRANCE, 92400 Courbevoie (FR)
(72) Inventeur: LABROUSSE, Laurent, F-38370 Saint Prim (FR); PETITJEAN, Eric, F-93260 Les Lilas (FR)
(74) Mandataire: Saint-Gobain Recherche
(86) Numéro de dépôt international: PCT/FR2005/050282
(87) Numéro de publication internationale: WO 2005/110939

(56) Documents cités:
- FR-A- 2 708 926
- US-A- 6 020 077
- US-A1- 2001 053 439
- US-A1- 2003 148 115
- US-A1- 2004 005 467
- US-A1- 2004 101 694

## Description

L'invention concerne les substrats transparents en matériau rigide minéral comme le verre, lesdits substrats étant revêtus d'un empilement de couches minces comprenant au moins une couche fonctionnelle de type métallique pouvant agir sur le rayonnement solaire et/ou le rayonnement infrarouge de grande longueur d'onde.

L'invention concerne plus particulièrement l'utilisation de tels substrats pour fabriquer des vitrages d'isolation thermique et/ou de protection solaire. Ces vitrages sont destinés aussi bien à équiper les bâtiments que les véhicules, en vue notamment de diminuer l'effort de climatisation et/ou de réduire une surchauffe excessive (vitrages dits « de contrôle solaire ») et/ou diminuer la quantité d'énergie dissipée vers l'extérieur (vitrages dits « bas émissifs ») entraînés par l'importance toujours croissante des surfaces vitrées dans les bâtiments et les habitacles de véhicules.

Un type d'empilement de couches connu pour conférer aux substrats de telles propriétés est constitué d'au moins une couche métallique, comme une couche d'argent, qui se trouve disposée entre deux revêtements en matériau diélectrique du type oxyde métallique. Cet empilement est généralement obtenu par une succession de dépôts effectués par une technique utilisant le vide comme la pulvérisation cathodique éventuellement assistée par champ magnétique. Peuvent aussi être prévues deux couches métalliques très fines, disposées une de chaque côté de la couche d'argent, la couche sous-jacente en tant que couche d'accrochage, de nucléation et/ou de protection lors d'un éventuel traitement thermique postérieurement au dépôt, et la surcouche en tant que couche de protection ou « sacrificielle » afin d'éviter l'altération de l'argent si la couche d'oxyde qui la surmonte est déposée par pulvérisation cathodique en présence d'oxygène et/ou si l'empilement subit postérieurement au dépôt un traitement thermique.

Il est ainsi connu des brevets US2004/0005467, US2003/0148115, EP-0 611 213, EP-0 678 484 et EP-0 638 528 des empilements de ce type, à une ou deux couches à base d'argent.

On demande actuellement de plus en plus que ces vitrages bas-émissifs ou de protection solaire présentent aussi des caractéristiques inhérentes aux substrats eux-mêmes, notamment esthétiques (qu'ils puissent être bombés), mécaniques (qu'ils soient plus résistants), ou de sécurité (qu'ils ne blessent pas en cas de bris). Cela nécessite de faire subir aux substrats verriers des traitements thermiques connus en eux-mêmes du type bombage, recuit, trempe et/ou des traitements liés à la réalisation d'un vitrage feuilleté.

Il faut alors adapter l'empilement de couches pour préserver l'intégrité des couches fonctionnelles du type couches en argent, notamment prévenir leur altération. Une première solution consiste à augmenter significativement l'épaisseur des fines couches métalliques évoquées précédemment et qui entourent les couches fonctionnelles : on s'assure ainsi que tout l'oxygène susceptible de diffuser à partir de l'atmosphère ambiante et/ou de migrer à partir du substrat en verre à haute température soit « capté » par ces couches métalliques en les oxydant, sans atteindre la (les) couche(s) fonctionnelle(s).

Ces couches sont parfois nommées « couches de blocage » ou « couches de bloqueur ».

On pourra se reporter notamment à la demande de brevet EP-A-0 506 507 pour la description d'un empilement « trempable » avec une couche d'argent disposée entre une couche d'étain et une couche de nickel-chrome. Mais il est clair que le substrat revêtu avant traitement thermique n'était considéré que comme un produit « semi-fini », les caractéristiques optiques le rendaient fréquemment inutilisable tel quel. Il était donc nécessaire de développer et fabriquer, en parallèle, deux types d'empilement de couches, l'un pour les vitrages non bombés/non trempés, l'autre pour les vitrages destinés à être trempés ou bombés, ce qui peut être compliqué en termes de gestion de stocks et de production notamment.

Une amélioration proposée dans le brevet EP-0 718 250 a permis de s'affranchir de cette contrainte ; l'enseignement de ce document consistant à concevoir un empilement de couches minces tel que ses propriétés optiques, ainsi que thermiques, restaient pratiquement inchangées, que le substrat une fois revêtu de l'empilement subisse ou non un traitement thermique. On parvient à un tel résultat en combinant deux caractéristiques :
- d'une part, on prévoit au-dessus de la (des) couche(s) fonctionnelle(s) une couche en un matériau apte à faire barrière à la diffusion de l'oxygène à haute température, matériau qui lui-même ne subit pas à haute température une modification chimique ou structurelle qui entraînerait une modification de ses propriétés optiques. Il peut ainsi s'agir de nitrure de silicium Si₃N₄ ou de nitrure d'aluminium AlN,
- d'autre part, la (les) couche(s) fonctionnelle(s) est (sont) directement au contact du revêtement diélectrique sous-jacent, notamment en oxyde de zinc ZnO.

Une couche unique de blocage (ou revêtement de blocage monocouche) est, de préférence en outre, prévue sur la ou les couche(s) fonctionnelle(s). Cette couche de blocage est à base d'un métal choisi parmi le niobium Nb, le tantale Ta, le titane Ti, le chrome Cr ou le nickel Ni ou d'un alliage à partir d'au moins deux de ces métaux, notamment d'un alliage de niobium et de tantale (Nb/Ta), de niobium et de chrome (Nb/Cr) ou de tantale et de chrome (Ta/Cr) ou de nickel et de chrome (Ni/Cr).

Si cette solution permet effectivement de conserver au substrat après traitement thermique un niveau de T_{L} et un aspect en réflexion extérieure assez constants, elle est encore susceptible d'amélioration.

En effet, les revêtements de blocage monocouches (la couche étant à un ou plusieurs constituants) ne sont pas dénués d'inconvénients :
- les couches métalliques à base de Ti engendrent, pour l'essentiel, des problèmes de tenue mécanique de l'empilement, notamment après traitement thermique ; des rayures peuvent se produire en particulier lors du transport entre le lieu où est opéré le dépôt de l'empilement sur le substrat et le lieu est opéré l'intégration de ce substrat dans un vitrage, notamment un vitrage multiple (double vitrage, vitrage feuilleté, ...) ;
- les couches métalliques à base de Ni engendrent, pour l'essentiel, des problèmes d'apparition de défauts optiques lors ou après le traitement thermique.

Le but de l'invention est alors de parvenir à remédier aux inconvénients de l'art antérieur, en mettant au point un nouveau type d'empilement à couche(s) fonctionnelle(s) du type de ceux décrits précédemment, empilement qui puisse subir des traitements thermiques à haute température du type bombage, trempe ou recuit en préservant sa qualité optique et sa tenue mécanique.

L'invention a ainsi pour objet, dans son acception la plus large, un substrat selon la revendication 1. Ce substrat verrier transparent est muni d'un empilement de couches minces comportant une alternance de « n » couches fonctionnelles à propriétés de réflexion dans l'infrarouge et/ou dans le rayonnement solaire, notamment de couches fonctionnelles métalliques à base d'argent ou d'alliage métallique contenant de l'argent, et de « (n + 1) » revêtements, avec n ≥ 1, lesdits revêtements étant composés d'une ou d'une pluralité de couches dont au moins une en matériau diélectrique, de manière à ce que chaque couche fonctionnelle soit disposée entre au moins deux revêtements. En vue de préserver la qualité optique et/ou mécanique de l'empilement au cas où le substrat muni dudit empilement est soumis à un traitement thermique de trempe, bombage, recuit, au moins une des couches fonctionnelles comporte un revêtement de blocage constitué :
∘ d'une part d'une couche « de protection » en un matériau apte à favoriser la protection de la couche fonctionnelle d'une attaque oxydante et/ou nitrurante, immédiatement en contact avec ladite couche fonctionnelle,
∘ d'autre part, d'au moins une couche « d'adhésion » en un matériau apte à favoriser l'adhésion, immédiatement en contact avec ladite couche « de protection ».

L'invention a consisté à prévoir un revêtement de blocage au moins bi-couche pour la couche fonctionnelle du type à base d'argent.

Il était important de continuer à prévoir directement au contact de la couche fonctionnelle au moins une couche « de protection » en un matériau apte à favoriser la protection de la couche fonctionnelle d'une attaque oxydante et/ou nitrurante, immédiatement en contact avec ladite couche fonctionnelle. Ainsi, on évite une modification chimique ou morphologique (démouillage) de la couche fonctionnelle, notamment par oxydation/nitruration qui diminuerait les performances thermiques de la couche fonctionnelle, et remettrait en question sa qualité optique, ce phénomène de dégradation étant incontrôlable.

Le, ou au moins un, matériau constitutif de la couche « de protection » présente ainsi, de préférence, une forte affinité pour l'élément oxygène et/ou azote et/ou pour l'eau.

L'invention ajoute à cette première protection à l'intérieur du revêtement de blocage, au moins une couche de renfort ou « d'adhésion » en un matériau apte à favoriser l'adhésion du revêtement de blocage avec les couches adjacentes et notamment la couche fonctionnelle, et ce d'une manière surprenant à travers la couche de protection.

La place du revêtement de blocage (au moins bi-couche) dans l'empilement est variable car il peut être déposé sous et/ou sur la couche fonctionnelle, mais la couche de protection est toujours en contact direct avec la couche fonctionnelle, pour éviter qu'il n'y ait de risque de création de défauts optiques notamment par formation « d'amas » de matériau de la couche fonctionnelle, notamment d'amas d'argent, ou de risque de diffusion d'oxygène ou d'azote vers la couche fonctionnelle.

L'invention ne s'applique pas seulement à des empilements ne comportant qu'une seule couche « fonctionnelle », disposée entre deux revêtements. Elle s'applique aussi à des empilements comportant une pluralité de couches fonctionnelles, notamment deux couches fonctionnelles alternées avec trois revêtements, ou de trois couches fonctionnelles alternées avec quatre revêtements, voire encore quatre couches fonctionnelles alternées avec cinq revêtements.

Dans le cas d'un empilement pluri-couches fonctionnelles, au moins une, et de préférence chaque, couche fonctionnelle est muni d'un revêtement de sous bloqueur et/ou de sur-bloqueur selon l'invention, c'est-à-dire d'un revêtement de blocage comprenant au moins deux couches distinctes.

La couche fonctionnelle, et de préférence chaque couche fonctionnelle est, de préférence, de nature métallique, en argent ou en alliage métallique comportant de l'argent.

En fait, la couche de protection est à choisir telle qu'elle présente, de préférence, au moins une des deux propriétés suivantes : il est important d'une part que le matériau dont elle est constituée ait un bon mouillage avec le matériau de la couche fonctionnelle, et/ou d'autre part que le matériau de la couche de protection présente également une forte affinité pour les éléments perturbateurs diffusant lors du traitement thermique (oxygène et/ou azote et/ou vapeur d'eau).

Il s'est avéré qu'un matériau particulièrement avantageux pour constituer cette couche de protection est un matériau essentiellement métallique en un matériau choisi parmi l'un au moins des métaux suivants Ti, Zr, Hf, Al, Nb, ou d'un alliage à base d'au moins un de ces matériaux.

Venons-en maintenant à la disposition dans l'empilement et à la nature de la couche d'adhésion.

La couche « d'adhésion » est à base de Ni, ou d'un alliage à base de Ni. La couche « d'adhésion » peut, notamment être à base d'un alliage de NiCr. Elle peut aussi être sous la forme d'un alliage NiY où Y peut être un métal, comme par exemple Ti, Zr, Al, Nb, Hf, ...

Cette couche « d'adhésion » peut être partiellement oxydée.

La couche « d'adhésion » présente, de préférence, une épaisseur au moins aussi épaisse que celle de la couche « de protection » et de préférence encore une épaisseur supérieure à celle de la couche « de protection »,.

La couche « d'adhésion » présente de préférence une épaisseur géométrique inférieure à 5 nm et de préférence encore comprise entre 0,5 et 2 nm et la couche « de protection » présente de préférence une épaisseur géométrique inférieure à 5 nm et de préférence encore comprise entre 0,5 et 2 nm

Le vitrage selon l'invention incorpore au moins le substrat porteur de l'empilement selon l'invention, éventuellement associé à au moins un autre substrat. Chaque substrat peut être clair ou coloré. Un des substrats au moins notamment peut être en verre coloré dans la masse. Le choix du type de coloration va dépendre du niveau de transmission lumineuse et/ou de l'aspect colorimétrique recherchés pour le vitrage une fois sa fabrication achevée.

Ainsi pour des vitrages destinés à équiper des véhicules, des normes imposent que le pare-brise ait une transmission lumineuse T_{L} d'environ 75%, un tel niveau de transmission n'étant pas exigé pour les vitrages latéraux ou le toit-auto, par exemple. Les verres teintés que l'on peut retenir sont par exemple ceux qui, pour une épaisseur de 4 mm, présentent une T_{L} de 65 % à 95 %, une transmission énergétique T_{E} de 40 % à 80 %, une longueur d'onde dominante en transmission de 470 nm à 525 nm associée à une pureté de transmission de 0,4 % à 6 % selon l'Illuminant D₆₅, ce que l'on peut « traduire » dans le système de colorimétrie (L, a*, b*) par des valeurs de a* et b* en transmission respectivement comprises entre -9 et 0 et entre -8 et +2.

Pour des vitrages destinés à équiper des bâtiments, le vitrage présente, de préférence, une transmission lumineuse T_{L} d'au moins 75% voire plus pour des applications « bas-émissif », et une transmission lumineuse T_{L} d'au moins 40% voire plus pour des applications « contrôle solaire ».

Le vitrage selon l'invention peut présenter une structure feuilletée, associant notamment au moins deux substrats rigides du type verre par au moins une feuille de polymère thermoplastique, afin de présenter une structure de type verre/empilement de couches minces/feuille(s)/verre. Le polymère peut notamment être à base de polyvinylbutyral PVB, éthylène vinylacétate EVA, polyéthylène téréphtalate PET, polychlorure de vinyle PVC.

Le vitrage peut aussi présenter une structure de vitrage feuilleté dit asymétrique, associant un substrat rigide de type verre à au moins une feuille de polymère de type polyuréthane à propriétés d'absorbeur d'énergie, éventuellement associée à une autre couche de polymères à propriétés « auto-cicatrisantes ». Pour plus de détails sur ce type de vitrage, on pourra se reporter notamment aux brevets EP-0 132 198, EP-0 131 523, EP-0 389 354. Le vitrage peut alors présenter une structure de type verre/empilement de couches minces/feuille(s) de polymère.

Dans une structure feuilletée, le substrat porteur de l'empilement est de préférence en contact avec une feuille de polymère.

Les vitrages selon l'invention sont aptes à subir un traitement thermique sans dommage pour l'empilement de couches minces. Ils sont donc éventuellement bombés et/ou trempés.

Le vitrage peut être bombé et/ou trempé en étant constitué d'un seul substrat, celui muni de l'empilement. On parle alors de vitrage « monolithique ». Dans le cas où ils sont bombés, notamment en vue de constituer des vitrages pour véhicules, l'empilement de couches minces se trouve de préférence sur une face au moins partiellement non plane.

Le vitrage peut aussi être un vitrage multiple, notamment un double-vitrage, au moins le substrat porteur de l'empilement étant bombé et/ou trempé. Il est préférable dans une configuration de vitrage multiple que l'empilement soit disposé de manière à être tourné du côté de la lame de gaz intercalaire.

Lorsque le vitrage est monolithique ou en vitrage multiple du type double-vitrage ou vitrage feuilleté, au moins le substrat porteur de l'empilement peut être en verre bombé ou trempé, le substrat pouvant être bombé ou trempé avant ou après le dépôt de l'empilement.

L'invention concerne également le procédé de fabrication des substrats selon l'invention, qui consiste à déposer l'empilement de couches minces sur son substrat, notamment en verre, par une technique sous vide du type pulvérisation cathodique éventuellement assistée par champ magnétique, puis à effectuer sur le substrat revêtu un traitement thermique de bombage/trempe ou recuit sans dégradation de sa qualité optique et/ou mécanique.

Il n'est toutefois pas exclu que la première ou les premières couches puissent être déposée(s) par une autre technique, par exemple par une technique de décomposition thermique de type pyrolyse.

Dans une version préférée de ce procédé, chaque couche du revêtement de blocage est déposée par pulvérisation cathodique d'une cible de composition différente de la cible utilisée pour le dépôt de la couche adjacente au moins du revêtement de blocage.

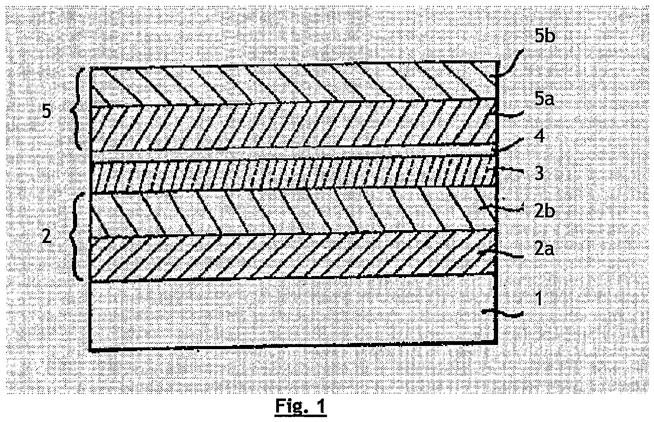

Les détails et caractéristiques avantageuses de l'invention ressortent des exemples non limitatifs suivants, illustrés à l'aide de la figure 1.

La figure 1 représente un empilement monocouche fonctionnelle, et ne respecte pas les proportions entre les épaisseurs des différents matériaux afin que sa lecture en soit facilitée.

Dans les exemples 1 à 4 qui suivent, l'empilement est déposé sur le substrat 1, qui est un substrat en verre silico-sodo-calcique clair de 4 mm d'épaisseur. L'empilement comporte une couche fonctionnelle unique à base d'argent 3 sur laquelle est disposé un fin revêtement de blocage 4.

Sous la couche fonctionnelle 3 se trouve un revêtement 2 constitué d'une pluralité de couches superposées à base de matériau diélectrique référencées 2a, 2b et sur la couche fonctionnelle 3, et au-dessus du revêtement de blocage 4, se trouve un revêtement 5 constitué d'une pluralité de couches superposées à base de matériau diélectrique référencées 5a, 5b.

Dans les exemples 1 à 4 :
- les couches 2a sont en Si₃N₄,
- les couches 2b sont en ZnO,
- les couches 5a sont en ZnO,
- les couches 5b sont en Si₃N₄,
- les couches 3 sont en argent,
et présentent les mêmes épaisseurs.

Seules changent, dans les différents exemples 1 à 4, la nature et l'épaisseur du revêtement de blocage 4.

Dans tous ces exemples, les dépôts successifs des couches de l'empilement s'effectuent par pulvérisation cathodique assistée par champ magnétique, mais toute autre technique de dépôt peut être envisagée à partir du moment où elle permet un bon contrôle et une bonne maîtrise des épaisseurs des couches à déposer.

L'installation de dépôt comprend au moins une chambre de pulvérisation munie de cathodes équipées de cibles en matériaux appropriés sous lesquels le substrat 1 passe successivement. Ces conditions de dépôt pour chacune des couches sont les suivantes :
- les couches 3 à base d'argent sont déposées à l'aide d'une cible en argent, sous une pression de 0,8 Pa dans une atmosphère d'argon,
- les couches 2b et 5a à base de ZnO sont déposées par pulvérisation réactive à l'aide d'une cible de zinc, sous une pression de 0,3 Pa et dans une atmosphère argon/oxygène,
- les couches 2a et 5b à base de Si₃N₄ sont déposées par pulvérisation réactive à l'aide d'une cible en silicium dopée au bore ou à l'aluminium, sous une pression de 0,8 Pa dans une atmosphère argon/azote,

Les densités de puissance et les vitesses de défilement du substrat 1 sont ajustées de manière connue pour obtenir les épaisseurs de couches voulues.

### EXEMPLE 1

Dans cet exemple, le revêtement 4 est une monocouche de Ti et est obtenu par pulvérisation réactive d'une cible de Ti sous pression de 0,8 Pa dans une atmosphère d'argon pur.

### EXEMPLE 2

Dans cet exemple selon l'invention, le revêtement 4 est bi-couche et est constitué d'une première couche en Titane déposée dans les mêmes conditions que celles de l'exemple 1, puis d'une seconde couche en alliage de Nickel-Chrome obtenue par pulvérisation d'une cible métallique en NiCr dans une atmosphère d'argon pur.

Pour fabriquer ce revêtement de blocage deux cibles de composition différentes ont été utilisées, ces deux cibles étant situées dans deux compartiments différents d'un même sas d'une installation de pulvérisation cathodique.

### EXEMPLE 3

Dans cet exemple selon l'invention, le revêtement 4 est également bi-couche et est constitué d'une première couche en Titane déposée dans les mêmes conditions que celles de l'exemple 1, puis d'une seconde couche en alliage de Nickel-Chrome obtenue par pulvérisation réactive, mais dans cet exemple l'atmosphère est constitué d'argon et d'oxygène, le taux d'oxygène étant ajusté pour faire diminuer fortement l'absorption par rapport au dépôt de l'exemple 2.

Pour fabriquer ce revêtement de blocage deux cibles de composition différentes ont été utilisées, ces deux cibles étant situées dans deux sas différents d'une même installation de pulvérisation cathodique, les deux sas étant séparés par une porte, afin d'empêcher l'oxygène de pénétrer dans le sas précédant.

### EXEMPLE 4

Dans cet exemple le revêtement 4 est bi-couche et est l'inverse de celui de l'exemple 3. Il est constitué d'une première couche en alliage de Nickel-Chrome déposée dans les mêmes conditions que celles de l'exemple 3, puis d'une seconde couche en Titane déposée dans les mêmes conditions que celles de l'exemple 3.

Le tableau 1 ci-après résume les épaisseurs des différentes couches, en nm.

**TABLEAU 1**

| | | **Exemple 1** | **Exemple 2** | **Exemple 3** | **Exemple 4** |
|---|---|---|---|---|---|
| Verre | (1) | - | - | - | - |
| Si₃N₄ | (2a) | 30 | 30 | 30 | 30 |
| ZnO | (2b) | 10 | 10 | 10 | 10 |
| Ag | (3) | 10 | 10 | 10 | 10 |
| | (4) | (Ti) : 1 | (Ti/NiCr) : 1 + 1 | (Ti/NiCrO_{X}) : 1 + 1 | (NiCrOₓ/Ti) : 1 + 1 |
| ZnO | (5a) | 20 | 20 | 20 | 20 |
| Si₃N₄ | (5b) | 20 | 20 | 20 | 20 |

Chacun de ces substrats revêtus a ensuite été découpé en trois parties, deux premières parties subissant chacune un essai de tenue mécanique différent avant un recuit à plus de 620°C et la troisième partie étant soumise directement à un recuit à plus de 620°C.

Le tableau 2 ci-dessous indique, pour chacun des exemples 1 à 3 :
- les valeurs de transmission lumineuse T_{L} en % (illuminant D₆₅) :
   - T_{Lb}, avant le traitement thermique et le test mécanique pour la première partie et la deuxième partie du substrat et
   - T_{La}, après le traitement thermique pour la troisième partie du substrat ;
- les quantités d'empilement restant Q en % de surface restante après un test Taber opéré avec une charge de 500 g pendant 50 tours ; et
- la valeur V de la force nécessaire, en Newton, pour réaliser une rayure dans l'empilement lors de la réalisation d'un test Erichsen à la pointe (pointe de Van Laar, bille d'acier).

**TABLEAU 2**

| | T_{Lb} | T_{La} | Q | V |
|---|---|---|---|---|
| Exemple 1 | 82,5 | 87,2 | 0 | 0,5 |
| Exemple 2 | 81,9 | 86,3 | 63,4 | 10 |
| Exemple 3 | 85,3 | 86,8 | 55 | 3 |

En outre, il a été remarqué que la rayure formée avant le recuit par le test Erichsen sur le substrat de l'exemple 1 s'est beaucoup corrodée lors du traitement thermique alors que la rayure formée avant le recuit par le test Erichsen sur les substrats des exemples 2 et 3 s'est très peu corrodée lors du traitement thermique.

De ces résultats peuvent être tirées les conclusions suivantes :
L'utilisation d'un revêtement de blocage bi-couche Ti/NiCr permet d'améliorer la tenue mécanique de l'empilement par rapport à un revêtement de blocage simple en Ti. L'utilisation d'un revêtement de blocage Ti/NiCr oxydé permet de conserver une mécanique acceptable (quoique légèrement moins bonne que Ti/NiCr où NiCr n'est pas oxydé), mais permet de diminuer les variations optiques lors du traitement thermique (la variation de la transmission lumineuse n'est plus dans ce cas que de + 1,5 %).

En ce qui concerne l'exemple 4, réalisé pour tester l'inversion des couches d'adhésion et de protection de l'exemple 3 dans un revêtement de sur-bloqueur, il a été remarqué que le fait d'inverser ces couches conduit à une très forte détérioration de l'empilement lors du traitement thermique (apparition de point de corrosion macroscopique, flou rouge important, détérioration de la couche d'argent se traduisant par une remontée de la résistance par carré, ...). Cette solution ne tient pas le processus de trempe et n'est donc pas envisageable.

Des exemples à plusieurs couches fonctionnelles ont également été réalisés. Ils conduisent aux mêmes conclusions.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Substrat (1) verrier transparent, muni d'un empilement de couches minces comportant une alternance de « n » couches fonctionnelles (3) à propriétés de réflexion dans l'infrarouge et/ou dans le rayonnement solaire, notamment de couches fonctionnelles métalliques à base d'argent ou d'alliage métallique contenant de l'argent, et de « (n + 1) » revêtements (2, 5), avec n ≥ 1, lesdits revêtements étant composés d'une ou d'une pluralité de couches (2a, 2b, 5a, 5b), dont au moins une en matériau diélectrique, de manière à ce que chaque couche fonctionnelle (3) soit disposée entre au moins deux revêtements (2, 5), ***caractérisé en ce qu'en*** vue de préserver la qualité optique et/ou mécanique de l'empilement au cas où le substrat (1) muni dudit empilement est soumis à un traitement thermique de trempe, bombage, recuit, au moins une des couches fonctionnelles (3) comporte un revêtement de blocage (4) constitué :
∘ d'une part d'une couche « de protection » en un matériau apte à favoriser la protection de la couche fonctionnelle d'une attaque oxydante et/ou nitrurante, immédiatement en contact avec ladite couche fonctionnelle, ladite couche « de protection » étant essentiellement métallique, en un matériau choisi parmi l'un au moins des métaux suivants Ti, Zr, Hf, Al, Nb, ou d'un alliage à base d'au moins un de ces matériaux,
∘ d'autre part, d'au moins une couche « d'adhésion » en un matériau apte à favoriser l'adhésion, immédiatement en contact avec ladite couche « de protection », ladite couche « d'adhésion » étant à base de Ni, ou d'un alliage à base de Ni.

2. Substrat (1) selon la revendication 1, ***caractérisé en ce que*** l'empilement comporte deux couches fonctionnelles alternées avec trois revêtements.

3. Substrat (1) selon la revendication 1, ***caractérisé en ce que*** la couche « d'adhésion » est à base d'un alliage de NiCr.

4. Substrat (1) selon l'une quelconque des revendications précédentes, ***caractérisé en ce que*** la couche « d'adhésion » est partiellement oxydée.

5. Substrat (1) selon l'une quelconque des revendications précédentes, ***caractérisé en ce que*** la couche « d'adhésion » présente une épaisseur au moins aussi épaisse que celle de la couche « de protection », et de préférence présente une épaisseur supérieure à celle de la couche « de protection ».

6. Substrat (1) selon l'une quelconque des revendications précédentes, ***caractérisé en ce que*** la couche « d'adhésion » présente une épaisseur géométrique inférieure à 5 nm et de préférence comprise entre 0,5 et 2 nm.

7. Substrat (1) selon l'une quelconque des revendications précédentes, ***caractérisé en ce que*** la couche « de protection » présente une épaisseur géométrique inférieure à 5 nm et de préférence comprise entre 0,5 et 2 nm.

8. Vitrage incorporant au moins un substrat (1) selon l'une quelconque des revendications précédentes, éventuellement associé à au moins un autre substrat.

9. Vitrage selon la revendication précédente monté en monolithique ou en vitrage multiple du type double-vitrage ou vitrage feuilleté, ***caractérisé en ce qu'au*** moins le substrat porteur de l'empilement est en verre bombé ou trempé.

10. Procédé de fabrication du substrat (1) selon l'une quelconque des revendications 1 à 7, ***caractérisé en ce qu'on*** dépose l'empilement de couches minces sur le substrat par une technique sous vide du type pulvérisation cathodique éventuellement assistée par champ magnétique, puis ***en ce qu'on*** effectue un traitement thermique de bombage, trempe ou recuit sur ledit substrat, sans dégradation de sa qualité optique et/ou mécanique.

11. Procédé selon la revendication précédente, ***caractérisé en ce que*** chaque couche du revêtement de blocage (4) est déposée par pulvérisation cathodique d'une cible de composition différente de la cible utilisée pour le dépôt de la couche adjacente.

## Patentansprüche

1. Transparentes Glassubstrat (1), das mit einem Stapel dünner Schichten versehen ist, der eine Wechselfolge von "n" Funktionsschichten (3) mit Reflexionseigenschaften im Infrarotbereich und/oder im Bereich der Sonnenstrahlung, insbesondere von metallischen Funktionsschichten auf der Basis von Silber oder einer Silber enthaltenden Metalllegierung, und von "(n + 1)" Beschichtungen (2, 5), mit n ≥ 1, aufweist, wobei die Beschichtungen aus einer oder mehreren Schichten (2a, 2b, 5a, 5b) bestehen, darunter mindestens einer aus einem dielektrischen Material, derart, dass jede Funktionsschicht (3) zwischen mindestens zwei Beschichtungen (2, 5) angeordnet ist, **dadurch gekennzeichnet, dass** zum Wahren der optischen und/oder mechanischen Qualität des Stapels in dem Fall, in dem das mit dem Stapel versehene Substrat (1) einer thermischen Härtungs-, Bombierungs-, Glühbehandlung unterzogen wird, mindestens eine der Funktionsschichten (3) eine Sperrbeschichtung (4) aufweist, die besteht aus:
o einerseits einer "Schutz"-Schicht aus einem Material, das fähig ist, den Schutz der Funktionsschicht vor einem oxidierenden und/oder nitrierenden Angriff zu begünstigen, direkt in Kontakt mit der Funktionsschicht, wobei die "Schutz"-Schicht hauptsächlich metallisch ist, aus einem Material, das ausgewählt wird unter mindestens einem der folgenden Metalle Ti, Zr, Hf, Al, Nb, oder einer Legierung auf der Basis mindestens eines dieser Materialien,
o andererseits mindestens einer "Haft"-Schicht aus einem Material, das fähig ist, die Haftung zu begünstigen, direkt in Kontakt mit der "Schutz"-Schicht, wobei die "Haft"-Schicht auf der Basis von Ni oder einer Legierung auf der Basis von Ni ist.

2. Substrat (1) nach Anspruch 1, **dadurch gekennzeichnet, dass** der Stapel zwei Funktionsschichten abwechselnd mit drei Beschichtungen aufweist.

3. Substrat (1) nach Anspruch 1, **dadurch gekennzeichnet, dass** die "Haft"-Schicht auf der Basis einer NiCr-Legierung ist.

4. Substrat (1) nach einem der vorhergehenden Ansprüche, **dadurch gekennzeichnet, dass** die "Haft"-Schicht teilweise oxidiert ist.

5. Substrat (1) nach einem der vorhergehenden Ansprüche, **dadurch gekennzeichnet, dass** die "Haft"-Schicht eine Dicke aufweist, die mindestens so dick ist wie diejenige der "Schutz"-Schicht, und vorzugsweise eine größere Dicke als diejenige der "Schutz"-Schicht aufweist.

6. Substrat (1) nach einem der vorhergehenden Ansprüche, **dadurch gekennzeichnet, dass** die "Haft"-Schicht eine geometrische Dicke geringer als 5 nm und vorzugsweise zwischen 0,5 und 2 nm liegend aufweist.

7. Substrat (1) nach einem der vorhergehenden Ansprüche, **dadurch gekennzeichnet, dass** die "Schutz"-Schicht eine geometrische Dicke geringer als 5 nm und vorzugsweise zwischen 0,5 und 2 nm liegend aufweist.

8. Verglasung, die mindestens ein Substrat (1) nach einem der vorhergehenden Ansprüche enthält, ggf. mindestens einem anderen Substrat zugeordnet.

9. Verglasung nach dem vorhergehenden Anspruch, die monolithisch oder in Mehrfachverglasung von der Art Doppelverglasung oder Verbundverglasung montiert ist, **dadurch gekennzeichnet, dass** mindestens das Trägersubstrat des Stapels aus bombiertem oder gehärtetem Glas ist.

10. Verfahren zur Herstellung des Substrats (1) nach einem der Ansprüche 1 à 7, **dadurch gekennzeichnet, dass** der Stapel dünner Schichten auf das Substrat durch eine Vakuumtechnik von der Art Kathodenzerstäubung ggf. durch ein Magnetfeld unterstützt aufgebracht wird, dass dann eine thermische Bombierungs-, Härtungs- oder Glühbehandlung am Substrat ohne Verschlechterung seiner optischen und/oder mechanischen Eigenschaft durchgeführt wird.

11. Verfahren nach dem vorhergehenden Anspruch, **dadurch gekennzeichnet, dass** jede Schicht der Sperrbeschichtung (4) durch Kathodenzerstäubung eines Targets einer anderen Zusammensetzung als das Target aufgebracht wird, das zum Aufbringen der benachbarten Schicht verwendet wird.

## Claims

1. A transparent glass substrate (1), provided with a thin-film multilayer comprising an alternation of n functional layers (3) having reflection properties in the infrared and/or in solar radiation, especially metallic functional layers based on silver or on a metal alloy containing silver, and (n+1) coatings (2, 5), where n ≥ 1, said coatings being composed of a layer or a plurality of layers (2a, 2b, 5a, 5b), including at least one made of a dielectric material, so that each functional layer (3) is placed between at least two coatings (2, 5), **characterized in that,** in order to preserve the optical and/or mechanical quality of the multilayer in the case in which the substrate (1) provided with said multilayer is subjected to a heat treatment of toughening, bending or annealing, at least one of the functional layers (3) includes a blocker coating (4) consisting of:
∘ on the one hand, a "protection" layer made of a material capable of helping to protect the functional layer from oxidizing and/or nitriding attack, immediately in contact with said functional layer, said "protection" layer being essentially metallic, made of a material chosen from at least one of the following metals: Ti, Zr, Hf, Al, Nb or an alloy based on at least one of these materials; and
∘ on the other hand, at least one "adhesion" layer made of a material capable of promoting adhesion, immediately in contact with said "protection" layer, said "adhesion" layer being based on Ni or on an Ni-based alloy.

2. The substrate (1) as claimed in claim 1, **characterized in that** the multilayer comprises two functional layers alternating with three coatings.

3. The substrate (1) as claimed in claim 1, **characterized in that** the "adhesion" layer is based on an NiCr alloy.

4. The substrate (1) as claimed in any one of the preceding claims, **characterized in that** the "adhesion" layer is partially oxidized.

5. The substrate (1) as claimed in any one of the preceding claims, **characterized in that** the "adhesion" layer has a thickness at least as great as that of the "protection" layer and preferably has a thickness greater than that of the "protection" layer.

6. The substrate (1) as claimed in any one of the preceding claims, **characterized in that** the "adhesion" layer has a geometric thickness of less than 5 nm and preferably between 0.5 and 2 nm.

7. The substrate (1) as claimed in any one of the preceding claims, **characterized in that** the "protection" layer has a geometric thickness of less than 5 nm and preferably between 0.5 and 2 nm.

8. A glazing unit incorporating at least one substrate (1) as claimed in any one of the preceding claims, optionally combined with at least one other substrate.

9. The glazing unit as claimed in the preceding claim, mounted in monolithic form or as multiple glazing of the double-glazing or laminated glazing type, **characterized in that** at least the substrate carrying the multilayer is made of curved or toughened glass.

10. A process for manufacturing the substrate (1) as claimed in any one of claims 1 to 7, **characterized in that** the thin-film multilayer is deposited on the substrate by a vacuum technique of the sputtering, optionally magnetically enhanced sputtering, type and then **in that** a heat treatment of bending, toughening or annealing is carried out on said substrate without degrading its optical and/or mechanical quality.

11. The process as claimed in the preceding claim, **characterized in that** each blocker coating layer (4) is deposited by sputtering using a target having a composition different from the target used for depositing the adjacent layer.
